# EUROPEAN PATENT APPLICATION

(11) **EP 4 745 067 A1**
(43) Date of publication of application: **20.05.2026**
(21) Application number: 25747968.3
(22) Date of filing: 26.01.2025
(51) Int. Cl.: B65G 54/02

(54) **MAGNETIC DRIVE CONVEYING SYSTEM**

(30) Priority: 31.01.2024 CN 202410141203
(71) Applicant: Shanghai Golytec Automation Co., Ltd., Shanghai 201100 (CN)
(72) Inventor: CHI, Feng, Shanghai 201100 (CN); GUO, Lin, Shanghai 201100 (CN); CHEN, Zenghui, Shanghai 201100 (CN); YANG, Tao, Shanghai 201100 (CN)
(74) Representative: Huang, Liwei
(86) International application number: PCT/CN2025/075287
(87) International publication number: WO 2025/162404

(57) **Abstract**

The present disclosure discloses a magnetic drive conveying system, including: a first conveying module, including a plurality of first track stators; a second conveying module, including a switching stator and a second track stator, where the switching stator has a converging end, a first diverging end, and a second diverging end, and includes a first conveying track and a second conveying track, where the first conveying track is located between the converging end and the first diverging end and includes a first armature winding, where the second conveying track is located between the converging end and the second diverging end and includes a second armature winding; a mover module, provided with a permanent magnet array, where the mover module moves along the first conveying track when the permanent magnet array is magnetically coupled to the first armature winding, where the mover module moves along the second conveying track when the permanent magnet array is magnetically coupled to the second armature winding; a docking module, including a transfer component and a third track stator, where the transfer component drives the third track stator to connect with the first track stator, the second track stator, or the switching stator. The magnetic drive conveying system according to embodiments of the present disclosure has high conveying efficiency.

## Description

### CROSS-REFERENCE TO RELATED APPLICATIONS

This application claims priority of Chinese Patent Application No. 202410141203.6, entitled "Magnetic Drive Conveying System", filed with the China National Intellectual Property Administration on January 31, 2024.

### TECHNICAL FIELD

The present disclosure relates to the technical field of magnetic levitation conveying, and in particular, to a magnetic drive conveying system.

### BACKGROUND

The magnetic drive conveying system in the related art is typically provided with a mover and a stator, where the mover can move relative to the stator to achieve object conveying.

A magnetic drive conveying system typically uses a docking module to transfer a mover on one line onto another line, so as to achieve transfer conveyance of the process. In some process scenarios, when the mover on one line carries different types of workpieces, such workpieces usually need to be classified and then conveyed to the next corresponding process through the docking module. For existing workpiece classification structures, an external execution device needs to be additionally provided for classification, thereby occupying additional space.

### SUMMARY

The objective of the present disclosure is to provide a magnetic drive conveying system. The magnetic drive conveying system has the advantage of high conveying efficiency.

To achieve the above objective, embodiments of the present disclosure propose a magnetic drive conveying system, including: a first conveying module, including a plurality of first track stators; a second conveying module, including a switching stator and at least one second track stator, where the switching stator has at least a converging end, a first diverging end, and a second diverging end, where the switching stator and the at least one second track stator cooperate to form at least one conveying line body, where the switching stator includes a first conveying track and a second conveying track, where the first conveying track is located between the converging end and the first diverging end and includes a first armature winding, where the second conveying track is located between the converging end and the second diverging end and includes a second armature winding; a mover module, provided with a permanent magnet array, where the mover module moves along the first conveying track when the permanent magnet array is magnetically coupled to the first armature winding, where the mover module moves along the second conveying track when the permanent magnet array is magnetically coupled to the second armature winding; a docking module, including a transfer component and a third track stator, where the transfer component is configured to drive the third track stator to move between the first conveying module and the second conveying module, so as to connect with the first track stator, the second track stator, or the switching stator.

The conveying modules of the magnetic drive conveying system according to the present disclosure are provided with the switching stator, which can achieve the switching of the mover module between different conveying line bodies. Within a single module, no additional docking mechanism is needed to achieve the switching of the mover module. Therefore, the mover module switches with high speed and high accuracy on the second conveying module, achieving high conveying efficiency. Additionally, the magnetic drive conveying system are provided with the docking module and the third track stator, which can achieve the conveying of the mover module between different areas and can prevent the first conveying module and the second conveying module from having a larger volume. Moreover, the docking module drives the third track stator between the first conveying module and the second conveying module, so that the conveying of the mover module between different areas is of higher speed.

### BRIEF DESCRIPTION OF THE DRAWINGS

To more clearly illustrate the technical solutions in the embodiments of the present disclosure or in the related art, the accompanying drawings to be used in the description of the embodiments or the related art will be briefly introduced below. Apparently, the accompanying drawings in the description below are merely some embodiments of the present disclosure. For those skilled in the art, other drawings can be obtained based on the structures shown in these accompanying drawings without creative efforts.
FIG. 1 is a first schematic structural diagram of a magnetic drive conveying system according to an embodiment of the present disclosure;
FIG. 2a is a second schematic structural diagram of a magnetic drive conveying system according to an embodiment of the present disclosure;
FIG. 2b is a third schematic structural diagram of a magnetic drive conveying system according to an embodiment of the present disclosure;
FIG. 3 is a schematic structural diagram of a second conveying module of the magnetic drive conveying system according to an embodiment of the present disclosure;
FIG. 4 is a schematic structural diagram of a mover module of the magnetic drive conveying system according to an embodiment of the present disclosure;
FIG. 5 is a schematic structural diagram of a second track stator of the magnetic drive conveying system according to an embodiment of the present disclosure;
FIG. 6 is a schematic structural diagram of a base of the magnetic drive conveying system according to an embodiment of the present disclosure;
FIG. 7 is a first schematic structural diagram of a switching stator of the magnetic drive conveying system according to an embodiment of the present disclosure;
FIG. 8 is a second schematic structural diagram of a switching stator of the magnetic drive conveying system according to an embodiment of the present disclosure;
FIG. 9 is a first schematic diagram showing a connection between adjacent switching stators according to an embodiment of the present disclosure;
FIG. 10 is a second schematic diagram showing a connection between adjacent switching stators according to an embodiment of the present disclosure;
FIG. 11 is a third schematic diagram showing a connection between adjacent switching stators according to an embodiment of the present disclosure;
FIG. 12 is a fourth schematic diagram showing a connection between adjacent switching stators according to an embodiment of the present disclosure;
FIG. 13 is a fifth schematic diagram showing a connection between adjacent switching stators according to an embodiment of the present disclosure;
FIG. 14 is a sixth schematic diagram showing a connection between adjacent switching stators according to an embodiment of the present disclosure;
FIG. 15 is a seventh schematic diagram showing a connection between adjacent switching stators according to an embodiment of the present disclosure;
FIG. 16 is an eighth schematic diagram showing a connection between adjacent switching stators according to an embodiment of the present disclosure;
FIG. 17 is a ninth schematic diagram showing a connection between adjacent switching stators according to an embodiment of the present disclosure;
FIG. 18 is a tenth schematic diagram showing a connection between adjacent switching stators according to an embodiment of the present disclosure;
FIG. 19 is an eleventh schematic diagram showing a connection between adjacent switching stators according to an embodiment of the present disclosure;
FIG. 20 is a twelfth schematic diagram showing a connection between adjacent switching stators according to an embodiment of the present disclosure;
FIG. 21 is a thirteenth schematic diagram showing a connection between adjacent switching stators according to an embodiment of the present disclosure;
FIG. 22 is a fourteenth schematic diagram showing a connection between adjacent switching stators according to an embodiment of the present disclosure;
FIG. 23 is a fifteenth schematic diagram showing a connection between adjacent switching stators according to an embodiment of the present disclosure;
FIG. 24 is a sixteenth schematic diagram showing a connection between adjacent switching stators according to an embodiment of the present disclosure.

### Description of reference numerals:

switching stator 1, mover module 2, magnetic drive conveying system 3, first track stator 4, coil assembly 5, permanent magnet array 6,
stand 20, first conveying module 21, second conveying module 22, base plate 22a, second track stator 23, third track stator 24, transfer component 25, docking module 26, tray 27, baffle 28, avoidance notch 28a, roller 29,
base 100, converging end 101, first diverging end 102, second diverging end 103, third diverging end 104, insertion slot 105, sub-base 106, weight-reducing groove 107,
first conveying track 200, first armature winding 210,
second conveying track 300, second armature winding 310,
first slot 411, second slot 421, first retractable member 430, second retractable member 440, third retractable member 470,
first slider 610, second slider 620,
third conveying track 700, third armature winding 710, third slot 730, fourth retractable member 731,
first conveying line body 810, second conveying line body 820, third conveying line body 830, fourth conveying line body 840, first sub-line body 850, second sub-line body 860.

The realization of the objectives, functional features, and advantages of the present disclosure will be further described in conjunction with the embodiments and with reference to the accompanying drawings.

### DETAILED DESCRIPTION OF THE EMBODIMENTS

To make the objectives, technical solutions, and advantages of the present disclosure clearer, the embodiments of the present disclosure will be further described in detail below in conjunction with the accompanying drawings.

When the description below involves the accompanying drawings, unless otherwise indicated, the same numerals in different drawings represent the same or similar elements. The implementations described in the illustrative embodiments below do not represent all implementations consistent with the present disclosure. On the contrary, they are merely examples of devices and methods consistent with some aspects of the present disclosure, as detailed in the appended claims.

In the description of the present disclosure, it is to be understood that terms "first", "second" or the like are merely for descriptive purposes and are not to be construed as indicating or implying relative importance. For those skilled in the art, the specific meanings of the above terms in the present disclosure can be understood according to specific circumstances. Additionally, in the description of the present disclosure, unless otherwise specified, "a plurality of" means two or more. "And/or" describes an association relationship between associated objects, indicating that three relationships may exist. For example, A and/or B may indicate three situations: A exists alone, both A and B exist, or B exists alone. The character "/" generally indicates that the associated objects before and after are in an "or" relationship.

Unless otherwise defined, all technical and scientific terms used herein have the same meaning as commonly understood by those skilled in the art to which the present disclosure belongs. The terms used in the specification herein are merely for the purpose of describing specific embodiments and are not intended to limit the present disclosure. The term "and/or" used herein includes any and all combinations of one or more related listed items.

A magnetic drive conveying system 3 according to an embodiment of the present disclosure is described below in conjunction with the accompanying drawings.

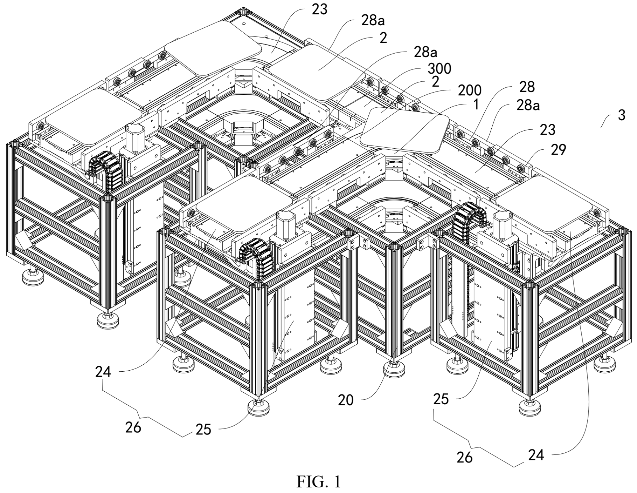

As shown in FIGS. 1-4, the magnetic drive conveying system 3 according to the embodiment of the present disclosure includes a first conveying module 21, a second conveying module 22, a mover module 2, and a docking module 26.

The first conveying module 21 includes a plurality of first track stators 4. The second conveying module 22 includes a switching stator 1 and at least one second track stator 23. The switching stator 1 has at least a converging end 101, a first diverging end 102, and a second diverging end 103. The switching stator 1 and the at least one second track stator 23 cooperate to form at least one conveying line body. The switching stator 1 includes a first conveying track 200 and a second conveying track 300. The first conveying track 200 is located between the converging end 101 and the first diverging end 102 and includes a first armature winding 210. The second conveying track 300 is located between the converging end 101 and the second diverging end 103 and includes a second armature winding 310.

The mover module 2 is provided with a permanent magnet array 6. When the permanent magnet array 6 is magnetically coupled to the first armature winding 210, the first armature winding 210 drives the mover module 2 to move along the first conveying track 200; when the permanent magnet array 6 is magnetically coupled to the second armature winding 310, the second armature winding 310 drives the mover module 2 to move along the second conveying track 300.

The docking module 26 includes a transfer component 25 and a third track stator 24. The transfer component 25 is configured to drive the third track stator 24 to move between the first conveying module 21 and the second conveying module 22, so as to connect with the first track stator 4, the second track stator 23, or the switching stator 1.

In a first aspect, according to the present disclosure, the switching stator 1 is arranged at the second conveying module 22, the switching stator 1 including the first conveying track 200 and the second conveying track 300, such that the mover module 2 switches between the first conveying track 200 and the second conveying track 300 at the switching stator 1, thereby achieving confluence and divergent. The confluence and divergent can be configured for workpiece type classification in certain scenarios, thereby avoiding the need for additional external execution devices at confluence and divergent positions. According to the present disclosure, the switching stator 1 is connected with different conveying line bodies, achieving confluence and divergent on the basis of conveying, thereby avoiding the need for additional external execution devices, and consequently reducing the space occupied by equipment.

In a second aspect, according to the present disclosure, a docking module 26 is further arranged. The docking module 26 includes a transfer component 25 and a third track stator 24. The third track stator 24 is configured to move between the first conveying module 21 and the second conveying module 22, so as to connect with the first track stator 4, the second track stator 23, or the switching stator 1. It can be understood that after the second conveying module 22 completes the confluence and divergent of different types of workpieces, the docking module 26 transfers the mover module 2 to the first conveying module 21, thereby performing the next process on the first conveying module 21.

It is to be noted that the above is merely an illustrative embodiment, and the second conveying module 22 can be applied to the confluence and divergent. Other process scenarios suitable for the confluence and divergent are to be within the protection scope of the present disclosure. For example, the above illustrative embodiment describes the mover module 2 on the second conveying module 22 being transferred to the first conveying module 21 after the confluence and divergent. Or, in other embodiments, the mover module 2 on the first conveying module 21 can also be transferred to the second conveying module 22, and then the confluence and divergent are performed by the second conveying module 22.

Specifically, the first track stator 4 may be a linear stator or an arc-shaped stator. That is, the plurality of first track stators 4 may all be linear stators, or the plurality of first track stators 4 may all be arc-shaped stators, or some of the plurality of first track stators 4 may be linear stators and the others of the plurality of first track stators 4 may be arc-shaped stators. The first track stator 4 may also be a switching stator 1, and at this time, the switching stator 1 of the first conveying module 21 can be connected to other first track stators 4.

In the present disclosure, the construction methods for the first conveying module 21 and the second conveying module 22 are not limited. The construction methods for the conveying line bodies of the first conveying module 21 and the second conveying module 22 can be the same. For example, the arrangement methods for the first track stator 4 and the second track stator 23 are the same, and at this time, the first track stator 4 and the second track stator 23 are correspondingly connected to different switching stators. Or, the construction methods for the conveying line bodies of the first conveying module 21 and the second conveying module 22 can be different. For example, the arrangement methods for the first track stator 4 and the second track stator 23 are different, or the connection methods for the first track stator 4 and the second track stator 23 are different, or the first track stator 4 and the second track stator 23 are different in quantity.

The mover module 2 is provided with a permanent magnet array 6. The permanent magnet array 6 can generate a constant magnetic field. The first armature winding 210 generates a changing traveling wave magnetic field by periodically changing the current direction and current magnitude. Similarly, the second armature winding 310 generates a changing traveling wave magnetic field by periodically changing the current direction and current magnitude. Therefore, the mover module 2 moves along the first conveying track 20 when the permanent magnet array 6 is magnetically coupled to the first armature winding 210, whereas the mover module 2 moves along the second conveying track 300 when the permanent magnet array 6 is magnetically coupled to the second armature winding 310.

The converging end 101, the first diverging end 102, and the second diverging end 103 of the switching stator 1 can be connected to different second track stators 23. At least one of the converging end 101, the first diverging end 102, and the second diverging end 103 can also be connected to the third track stator 24. The second conveying module 22 according to the embodiment of the present disclosure is provided with the switching stator 1, which can achieve the switching of the mover module 2 between different conveying line bodies. Within a single module, no additional external execution device is needed to achieve the switching of the mover module 2. Therefore, the mover module 2 switches with high speed and high accuracy on the second conveying module 22.

Certainly, it can be understood that the first conveying module 21 can also achieve the switching of the mover module 2 between different conveying line bodies through the switching stator 1 when the first conveying module 21 according to the embodiment of the present disclosure includes a switching stator 1. Within a single module, no additional docking mechanism is needed to achieve the switching of the mover module 2. Therefore, the mover module 2 switches with high speed and high accuracy on the first conveying module 21, achieving high conveying efficiency.

The transfer component 25 according to the present disclosure can drive the third track stator 24 to perform horizontal movement, vertical movement, or rotational motion. For example, the transfer component 25 may include at least one of a linear motor, a rotary motor, a pneumatic actuator, and a hydraulic actuator. Moreover, the third track stator 24 may be a linear stator, an arc-shaped stator, or a switching stator 1.

Additionally, the magnetic drive conveying system 3 may include a plurality of docking modules 26 each connected to a third track stator 24. The structure of the third track stator 24 may be the same. For example, a plurality of third track stators 24 are all linear stators or arc-shaped stators. The structure of the third track stator 24 may also be different. For example, some of the plurality of third track stators 24 are linear stators and the others of the plurality of third track stators 24 are arc-shaped stators.

The magnetic drive conveying system 3 is provided with the first conveying module 21 and the second conveying module 22. The first conveying module 21 and the second conveying module 22 are spaced. For example, the first conveying module 21 and the second conveying module 22 are spaced either in a horizontal direction or in a vertical direction. The first conveying module 21 and the second conveying module 22 are spatially located at different areas. The transfer component 25 drives the third track stator 24 to dock with the first conveying module 21 or the second conveying module 22.

For example, when the mover module 2 moves from the first conveying module 21 to the second conveying module 22, firstly the transfer component 25 drives the third track stator 24 to connect with the first conveying module 21, and then the mover module 2 moves from the first conveying module 21 to the third track stator 24, and finally the transfer component 25 drives the third track stator 24 to connect with the second conveying module 22, and the mover module 2 moves from the third track stator 24 to the second conveying module 22.

When the mover module 2 moves from the second conveying module 22 to the first conveying module 21, firstly the transfer component 25 drives the third track stator 24 to connect with the second conveying module 22, and then the mover module 2 moves from the second conveying module 22 to the third track stator 24, and finally the transfer component 25 drives the third track stator 24 to connect with the first conveying module 21, and the mover module 2 moves from the third track stator 24 to the first conveying module 21.

The transfer component 25 and the third track stator 24 are provided, which can achieve the conveying of the mover module 2 between different areas and can prevent the first conveying module 21 and the second conveying module 22 from having a larger volume. Moreover, the transfer component 25 drives the third track stator 24 between the first conveying module 21 and the second conveying module 22, so that the conveying of the mover module 2 between different areas is of higher speed.

In some embodiments of the present disclosure, as shown in FIGS. 1, 2b, and 4, an upper side of the mover module 2 is connected to a tray 27, an orthogonal projection of the tray 27 onto the mover module 2 covering the mover module 2. The tray 27 can be configured to carry an object to be conveyed, such as a workpiece. The orthogonal projection of the tray 27 onto the mover module 2 covers the mover module 2, that is, the tray 27 has a larger carrying area compared to the mover module 2. Therefore, the tray 27 can carry a larger-sized object to be conveyed, or the tray 27 can carry more quantity of objects to be conveyed, improving the conveying efficiency of the magnetic drive conveying system 3.

Two opposite sides in a width direction of the conveying line body are provided with baffles 28. In a height direction of the conveying line body, the baffles 28 are at least higher than a lower surface of the tray 27 to define the moving stroke of the tray 27 in the width direction of the conveying line body.

In the present disclosure, the connection method between the tray 27 and the mover module 2 is not limited. The tray 27 and the mover module 2 may be constructed as an integrated structure. For example, the tray 27 and the mover module 2 are integrated by welding or injection molding. Or, the tray 27 and the mover module 2 may be constructed as a split structure. For example, the tray 27 is detachably connected to the mover module 2 through snap-fitting, screw connection, etc.

In other words, in the width direction of the conveying line body, the baffles 28 are located on two opposite sides of the tray 27. In the height direction of the conveying line body, upper side faces of the baffles 28 are higher than the lower surface of the tray 27. The upper side faces of the baffles 28 may be higher than the upper surface of the tray 27, the baffles 28 completely blocking the side face of the tray 27. Or, the upper side faces of the baffles 28 may be lower than the upper surface of the tray 27, the baffles 28 blocking a portion of the side face of the tray 27.

During the movement of the mover module 2 along the conveying line body, when the mover module 2 has a tendency to deviate from a preset trajectory in the width direction of the conveying line body, the side face of the tray 27 in the width direction comes into contact with the baffle 28, and the baffle 28 limits the tray 27, thereby ensuring that the mover module 2 moves along the preset trajectory, and improving the stability of the movement of the mover module 2.

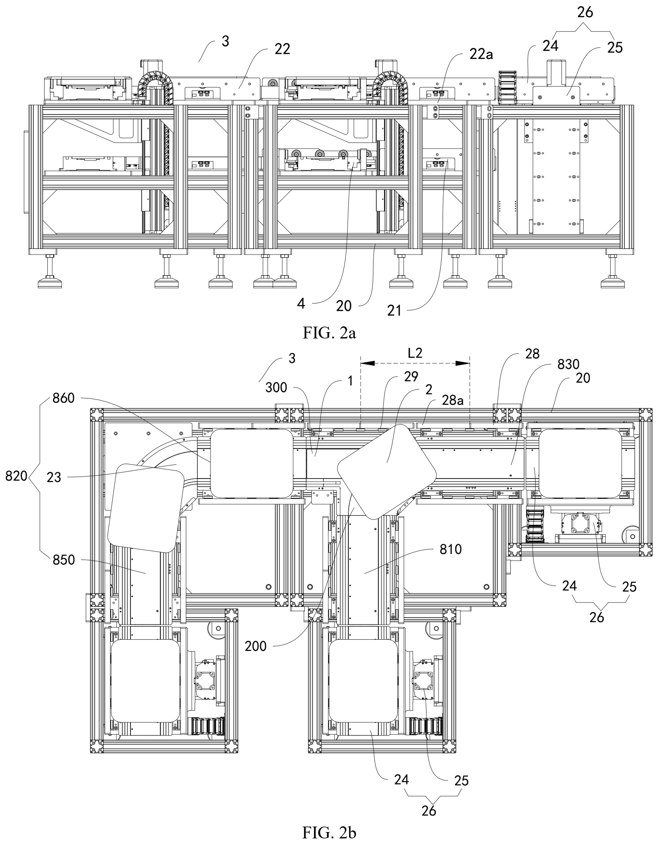

In some embodiments of the present disclosure, as shown in FIGS. 1 and 2b, the baffle 28 is provided with rollers 29 which are rotatable relative to the baffle 28. The rotation axis of the roller 29 extends in the width direction of the conveying line body. The roller 29 is configured to be in contact with the lower surface of the tray 27.

Specifically, a gap exists between the roller 29 and the mover module 2. In the width direction of the conveying line body, the two opposite sides of the tray 27 extend beyond the two opposite sides of the mover module 2, and the roller 29 are in contact with the lower surface of a portion of the tray 27 that extends beyond the mover module 2.

For example, each baffle 28 is mounted with a plurality of rollers 29 which are spaced along an extension direction of the conveying line body, and the mover module 2, when moving relative to the conveying line body, comes into contact with different rollers 29. Or, each baffle 28 is mounted with one roller 29 which is constructed in the form of a conveying belt, and the mover module 2, when moving relative to the conveying line body, is always in contact with the roller 29.

During the movement of the mover module 2 along the extension direction of the conveying line body, the roller 29 can also play a role in supporting the tray 27 on the basis of the mover module 2 supporting the tray 27. The load capacity of the tray 27 is stronger. Moreover, the friction force between the roller 29 and the tray 27 is smaller due to the rolling friction between the roller 29 and the tray 27. The mover module 2 moves quickly to ensure that the mover module 2 has higher conveying efficiency.

In other embodiments of the present disclosure, the tray 27 is provided with rollers 29 which are rotatable relative to the tray 27. The rotation axis of the roller 29 extends in the width direction of the conveying line body. One side face of the baffle 28 facing the mover module 2 is provided with a protrusion (not shown in the figure). The roller 29 is in contact with the protrusion, and specifically the roller 29 is in contact with an upper surface of the protrusion.

Specifically, a gap exists between the roller 29 and the mover module 2. In the width direction of the conveying line body, the two opposite sides of the tray 27 extend beyond the two opposite sides of the mover module 2, and the roller 29 is arranged on a portion of the tray 27 that extends beyond the mover module 2.

In the width direction of the conveying line body, each side of the two opposite sides of the tray 27 is mounted with a plurality of rollers 29 which are spaced along the extension direction of the conveying line body. During the movement of the mover module 2 along the extension direction of the conveying line body, the protrusion can also play a role in supporting the tray 27 through the roller 29 on the basis of the mover module 2 supporting the tray 27. The load capacity of the tray 27 is stronger. Moreover, the friction force between the roller 29 and the protrusion is smaller due to the rolling friction between the roller 29 and the protrusion. The mover module 2 moves quickly to ensure that the mover module 2 has higher conveying efficiency.

In some embodiments of the present disclosure, as shown in FIGS. 1 and 2b, an access opening is defined between the baffles 28 on the two opposite sides in the width direction of the conveying line body. The access opening is located on one side of the mover module 2 that is away from the conveying line body, and the mover module 2 is placed into or taken out from between the baffles 28 through the access opening.

For example, as shown in FIG. 2a, the second conveying module 22 may be provided with a base plate 22a. The baffle 28 is mounted on an upper surface of the base plate 22a. The baffle 28 and the base plate 22a may be constructed as an integrated structure, and may be processed by stamping, extrusion, etc. Or, the baffle 28 and the base plate 22a are constructed as a split structure, and may be connected through threaded fastener (such as bolt or screw) connection, snap-fitting, riveting, etc.

Specifically, the access opening is located on one side of the baffle 28 that is distant from the base plate 22a, and the mover module 2 can be placed onto or taken out from the conveying line body through the access opening along the vertical direction. In this way, the quantity of the mover modules 2 on the conveying line body can be adjusted in time according to the conveying requirements, that is, the quantity of the mover modules 2 can be increased and decreased, which reduces the complexity of the structure on the basis of ensuring the conveying efficiency.

Additionally, the switching stator 1 and a plurality of second track stators 23 can be mounted on the upper surface of the base plate 22a, and the switching stator 1 and the second track stator 23 are also located between the baffles 28 on the two opposite sides in the width direction of the conveying line body. The switching stator 1 and the second track stator 23 can also be placed onto or taken out from the base plate 22a through the access opening, so as to realize the arrangement of the conveying line body, which is convenient for adjusting the layout of the conveying line body in time and is easy to disassemble and assemble.

Further, in some embodiments, the second track stator 23, which has cooperated with the switching stator 1 to form a conveying line body, may be at least one of a switching stator 1, a linear stator, and an arc-shaped stator. That is, the second track stator 23 may be a linear stator, an arc-shaped stator, or a switching stator 1. In other words, the plurality of second track stators 23 may all be linear stators, or the plurality of second track stators 23 may all be arc-shaped stators, or some of the plurality of second track stators 23 may be linear stators, some of the plurality of second track stators 23 may be arc-shaped stators and the remainder of the plurality of second track stators 23 may be switching stators 1. Hence, the diversity of the conveying of the second conveying module 22 is improved.

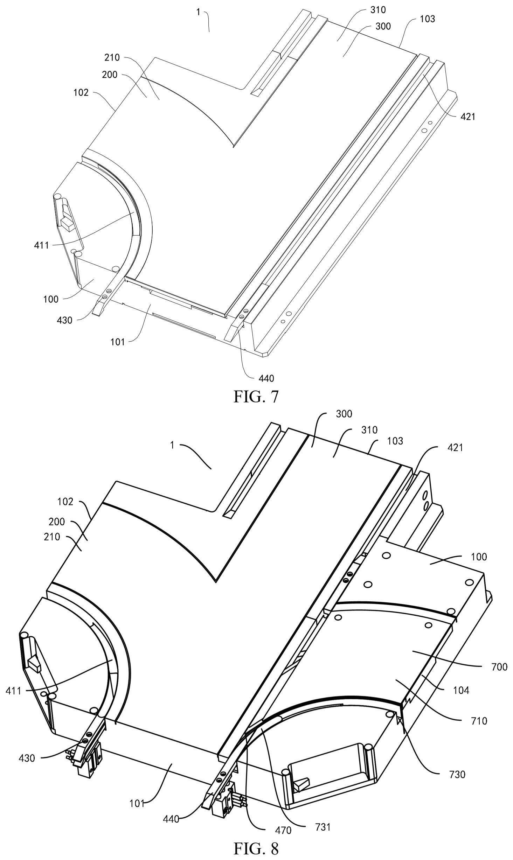

In some embodiments of the present disclosure, as shown in FIGS. 2b, 3, 7, and 8, the switching stator 1 and three second track stators 23 cooperate to form three conveying line bodies which are respectively: a first conveying line body 810, a second conveying line body 820, and a third conveying line body 830. The first conveying line body 810, the second conveying line body 820, and the third conveying line body 830 are communicated through the switching stator 1. The first conveying line body 810 is connected to the first diverging end 102. The second conveying line body 820 is connected to the second diverging end 103. The third conveying line body 830 is connected to the converging end 101. A center axis of the first conveying line body 810 and a center axis of the second conveying line body 820 are non-parallel.

It can be understood that the first conveying line body 810 and the second conveying line body 820 may be output line bodies, while the third conveying line body 830 may be an input line body. Or, the first conveying line body 810 and the second conveying line body 820 may be input line bodies, while the third conveying line body 830 may be an output line body.

In the present disclosure, an angle between the first conveying line body 810 and the second conveying line body 820 is not limited. The angle between the first conveying line body 810 and the second conveying line body 820 needs to be greater than 0° and not greater than 90°, so as to cause a turning angle of the mover module 2 at a junction between the first conveying line body 810 and the second conveying line body 820 to be not greater than 90°, so that the movement of the mover module 2 is smooth.

Specifically, referring to FIGS. 1 and 2b, the baffle 28 has an avoidance notch 28a. The avoidance notch 28a is adjacent to an intersection of the first conveying line body 810, the second conveying line body 820, and the third conveying line body 830. When the mover module 2 moves among the first conveying line body 810, the second conveying line body 820, and the third conveying line body 830, the avoidance notch 28a avoids the tray 27.

The tray 27 is generally of a rectangular structure, and top corners of the tray 27 are arc-shaped transitions to reduce the sharpness of the top corners of the tray 27, which avoids accidental injury to an operator or damage to equipment. Taking the mover module 2 performing the confluence and divergent process at the switching stator 1 as an example, when the mover module 2 moves from the first conveying line body 810 onto the third conveying line body 830, or from the second conveying line body 820 onto the third conveying line body 830, or from the third conveying line body 830 onto the first conveying line body 810, or from the third conveying line body 830 onto the second conveying line body 820, the mover module 2 rotates at the switching stator 1 at the intersection of the three conveying line bodies. During the rotation of the mover module 2, an inner arc side and an outer arc side exist. The inner arc side and the outer arc side are located on two opposite sides of the mover module 2 in the width direction of the conveying line body. The turning radius of the inner arc side is less than the turning radius of the outer arc side. The top corner of the outer arc side may deviate to the baffle 28 during the rotation of the mover module 2, and the baffle 28 is configured to limit the mover module 2. Therefore, the baffle 28 adjacent to the outer arc side needs to have an avoidance notch 28a, and the top corner of the outer arc side passes through the avoidance notch 28a to prevent collision interference between the tray 27 and the baffle 28, ensuring the smooth movement of the mover module 2.

When the baffle 28 is provided with rollers 29, the avoidance notch 28a needs to be located above the roller 29, and the avoidance notch 28a is spaced apart from the roller 29, so that the mounting of the roller 29 is not affected by the avoidance notch 28a, ensuring the stable connection between the roller 29 and the baffle 28.

In some embodiments of the present disclosure, as shown in FIGS. 1 and 2b, at least one second track stator 23 is an arc-shaped stator, and at least one of the three conveying line bodies includes a first sub-line body 850, a second sub-line body 860, and the arc-shaped stator. The first sub-line body 850 and the second sub-line body 860 are connected to both ends of the arc-shaped stator to form a curved track.

In other words, at least one of the three conveying line bodies includes a first sub-line body 850, a second sub-line body 860, and an arc-shaped stator. That is, the first conveying line body 810 may include a first sub-line body 850, a second sub-line body 860, and an arc-shaped stator, or the second conveying line body 820 may include a first sub-line body 850, a second sub-line body 860, and an arc-shaped stator, or the third conveying line body 830 may include a first sub-line body 850, a second sub-line body 860, and an arc-shaped stator.

Alternatively, two of the three conveying line bodies include a first sub-line body 850, a second sub-line body 860, and an arc-shaped stator. That is, both the first conveying line body 810 and the second conveying line body 820 may include a first sub-line body 850, a second sub-line body 860, and an arc-shaped stator, or both the first conveying line body 810 and the third conveying line body 830 may include a first sub-line body 850, a second sub-line body 860, and an arc-shaped stator, or both the second conveying line body 820 and the third conveying line body 830 may include a first sub-line body 850, a second sub-line body 860, and an arc-shaped stator.

Alternatively, the three conveying line bodies all include a first sub-line body 850, a second sub-line body 860, and an arc-shaped stator. That is, the first conveying line body 810, the second conveying line body 820, and the third conveying line body 830 may all include a first sub-line body 850, a second sub-line body 860, and an arc-shaped stator.

The baffle 28 of the first sub-line body 850 adjacent to one side connected to the arc-shaped stator may also be provided with an avoidance notch 28a, and the baffle 28 of the second sub-line body 860 adjacent to one side connected to the arc-shaped stator may also be provided with an avoidance notch 28a. When the mover module 2 rotates at the arc-shaped stator, the avoidance notch 28a can be configured to avoid the tray 27.

In some embodiments of the present disclosure, as shown in FIGS. 2b, 3, 4, 7 and 8, the first conveying track 200 is provided with a first slot 411, and the second conveying track 300 is provided with a second slot 421. The mover module 2 has a first slider 610 and a second slider 620. The first slider 610 is slidably arranged in the first slot 411 and the first slider 610 is configured to guide the mover module 2 to move along the first conveying track 200; the second slider 620 is slidably arranged in the second slot 421 and the second slider 620 is configured to guide the mover module 2 to move along the second conveying track 300.

As such, the mover module 2 is under the limiting and guiding effect of the first slider 610 and the second slider 620, supplemented by the limiting and guiding of the baffles 28 on both sides, such that the conveying of the mover module 2 is more stably, avoiding damage to external components or staff personnel caused by derailment of the mover module 2 due to factors such as sudden power failure and breakdown, disordered control, etc.

Further, the first conveying line body 810 connected to the first diverging end 102 may also include a first slot 411. That is, the first conveying track 200 and the first conveying line body 810 have the first slot 411 continuously arranged, so that the mover module 2, when running on the first conveying line body 810, can also be limited and guided by the first slider 610, which consequently improves the stability of the mover module 2 running on the first conveying line body 810. Further, when the mover module 2 switches between the first conveying line body 810 and the first conveying track 200, the first slider 610 always remains within the first slot 411 to further improve the stability of the mover module 2 during movement. Moreover, the first slot 411 guides the first slider 610, so as to ensure that the movement trajectory of the mover module 2 meets the requirements.

Similarly, the second conveying line body 820 connected to the second diverging end 103 may also include a second slot 421. That is, the second conveying track 300 and the second conveying line body 820 have the second slot 421 continuously arranged, so that the mover module 2, when running on the second conveying line body 820, can also be limited and guided by the second slider 620, which consequently improves the stability of the mover module 2 running on the second conveying line body 820. Further, when the mover module 2 switches between the second conveying line body 820 and the second conveying track 300, the second slider 620 always remains within the second slot 421 to further improve the stability of the mover module 2 during movement. Moreover, the second slot 421 guides the second slider 620, so as to ensure that the movement trajectory of the mover module 2 meets the requirements.

Similarly, the third conveying line body 830 connected to the converging end 101 may include at least one of the first slot 411 and the second slot 421. That is, in some embodiments, the third conveying line body 830 and the first conveying track 200 have the first slot 411 continuously arranged; or, in other embodiments, the third conveying line body 830 and the second conveying track 300 have the second slot 421 continuously arranged; or, in yet other embodiments, the third conveying line body 830 and the first conveying track 200 have the first slot 411 continuously arranged, and the third conveying line body 830 and the second conveying track 300 have the second slot 421 continuously arranged, where the first slot 411 and the second slot 421 are spaced on both sides in the width direction of the third conveying line body 830.

In the above embodiment, the conveying track and the corresponding conveying line body have the slot continuously arranged, causing the movement of the mover module 2 during the confluence and divergent process to be more stable, and improving the stability of the mover module 2 running on the conveying line body.

In conjunction with FIGS. 1 and 2b, taking the divergent process at the switching stator 1 as an example, the structure of the second conveying module 22 is described below.

Since the first conveying line body 810 and the third conveying line body 830 are not parallel to each other, the baffle 28 on one side of the first conveying line body 810 that is away from the third conveying line body 830 needs to be provided with an avoidance notch 28a, and the baffle 28 on one side of the third conveying line body 830 that is away from the first conveying line body 810 needs to be provided with an avoidance notch 28a.

When the mover module 2 is located at the first conveying line body 810, the first slider 610 is located on one side of the mover module 2 that is adjacent to the third conveying line body 830, and the second slider 620 is located on one side of the mover module 2 that is distant from the third conveying line body 830; when the mover module 2 is located at the third conveying line body 830, the first slider 610 is located on one side of the mover module 2 that is adjacent to the first conveying line body 810, and the second slider 620 is located on one side of the mover module 2 that is distant from the first conveying line body 810.

It can be known that when the mover module 2 moves between the first conveying line body 810 and the third conveying line body 830, a turning radius of the first slider 610 is less than a turning radius of the second slider 620 during the rotation of the mover module 2. The first slider 610 is located on the inner arc side of the mover module 2, and the second slider 620 is located on the outer arc side of the mover module 2.

A maximum distance between either end of the mover module 2 in a movement direction of the mover module 2 and the first slider 610 is L1. The size of the avoidance notch 28a is L2. L1 ≤ L2. The size of the avoidance notch 28a being L2 refers to the size of the avoidance notch 28a along the extension direction of the conveying line body where the avoidance notch 28a is located being L2.

Specifically, the mover module 2 has two edges in the movement direction of the mover module 2. The two edges are set as a first edge and a second edge. When the mover module 2 moves from the third conveying line body 830 to the first conveying line body 810, the first edge enters the first conveying line body 810 earlier than the second edge; when the mover module 2 moves from the first conveying line body 810 to the third conveying line body 830, the second edge enters the third conveying line body 830 earlier than the first edge.

When the mover module 2 has only one first slider 610, the size L2 of the avoidance notch 28a of the first conveying line body 810 is greater than the distance between the first slider 610 and the first edge, and the size L2 of the avoidance notch 28a of the third conveying line body 830 is greater than the distance between the first slider 610 and the second edge.

When the mover module 2 is provided with a plurality of first sliders 610, and the plurality of first sliders 610 are spaced along the movement direction of the mover module 2, the size L2 of the avoidance notch 28a of the first conveying line body 810 is greater than the distance between the first slider 610 closest to the second edge and the first edge, and the size L2 of the avoidance notch 28a of the third conveying line body 830 is greater than the distance between the first slider 610 closest to the first edge and the second edge.

It is to be noted that in some embodiments, the avoidance notch 28a is located at the end of the conveying line body where the avoidance notch 28a is located. At this time, one side of the avoidance notch 28a that is adjacent to the end of the conveying line body where the avoidance notch 28a is located may also be open. In this way, the size of the avoidance notch 28a may be less than L1, or not less than L1. That is, the size of the avoidance notch 28a located at the end of the conveying line body where the avoidance notch 28a is located is not restricted by L1.

In some embodiments of the present disclosure, as shown in FIGS. 2b, 3, 4, 7 and 8, a first retractable member 430 that can be extended and retracted is provided within the first slot 411, and a second retractable member 440 that can be extended and retracted is provided within the second slot 421. The first retractable member 430 and the second retractable member 440 are arranged adjacent to the converging end 101. The first slider 610 and the second slider 620 can be extended and retracted relative to the mover module 2.

Specifically, the first conveying line body 810 and the first conveying track 200 have the first slot 411 continuously arranged, and the second conveying line body 820 and the second conveying track 300 have the second slot 421 continuously arranged. When the mover module 2 moves on the first conveying line body 810 and the first conveying track 200, the first slider 610 always remains within the first slot 411, so that the first slot 411 guides the first slider 610, so as to ensure that the movement trajectory of the mover module 2 meets the requirements; when the mover module 2 moves on the second conveying line body 820 and the second conveying track 300, the second slider 620 always remains within the second slot 421, so that the second slot 421 guides the second slider 620, so as to ensure that the movement trajectory of the mover module 2 meets the requirements.

Further, when the mover module 2 needs to be switched and conveyed to the first conveying line body 810 or the second conveying line body 820 at the switching stator 1, at this time, the first slider 610 or the second slider 620 needs to be lifted to release the fitting between the slider and the slot, thereby achieving conveying in a confluence and divergent manner.

When the mover module 2 moves from the converging end 101 to the first diverging end 102, the first retractable member 430 is retracted, and the second retractable member 440 is lifted, and the first slider 610 remains within the first slot 411, and the second slider 620, pushed by the second retractable member 440, is disengaged from the second slot 421.

When the mover module 2 moves from the converging end 101 to the second diverging end 103, the first retractable member 430 is lifted, and the second retractable member 440 is retracted, and the first slider 610, pushed by the first retractable member 430, is disengaged from the first slot 411, and the second slider 620 remains within the second slot 421.

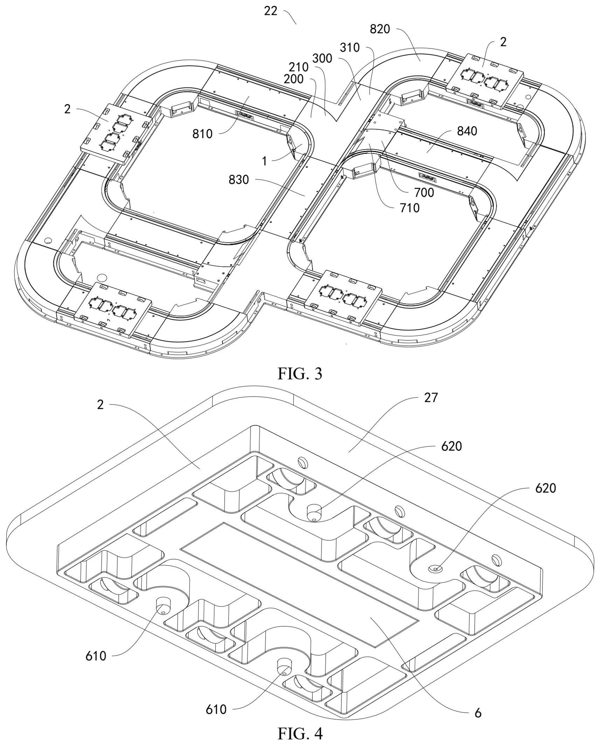

In some embodiments of the present disclosure, as shown in FIGS. 3, 4, and 8, the switching stator 1 further has a third diverging end 104. The first diverging end 102 and the third diverging end 104 are arranged on both sides of the second diverging end 103. The switching stator 1 further includes a third conveying track 700. The third conveying track 700 is located between the converging end 101 and the third diverging end 104 and includes a third armature winding 710. The third armature winding 710, when magnetically coupled to the permanent magnet array 6, is configured to drive the mover module 2 to move between the converging end 101 and the third diverging end 104.

Specifically, the mover module 2 located at the converging end 101 of the switching stator 1 can be conveyed to the first diverging end 102 through the first conveying track 200, or the mover module 2 located at the converging end 101 of the switching stator 1 can be conveyed to the second diverging end 103 through the second conveying track 300, or the mover module 2 located at the converging end 101 of the switching stator 1 can be conveyed to the third diverging end 104 through the third conveying track 700. Meanwhile, the mover modules 2 located at the first diverging end 102, the second diverging end 103, and the third diverging end 104 can also be conveyed to the converging end 101 through the corresponding conveying tracks. The switching stator 1 in the embodiment of the present disclosure has more output ends, which can adapt to conveying environments that are more complex, improving the diversity of the conveying method. This further enables the magnetic drive conveying system 3 according to the present disclosure to have a more diverse conveying method on the basis of structural miniaturization, allowing for application to environments more complex, such as production workshops, sorting warehouses, that need the magnetic drive conveying system 3.

In some embodiments of the present disclosure, as shown in FIGS. 3, 4, and 8, the switching stator 1 and four second track stators 23 cooperate to form four conveying line bodies which are respectively: a first conveying line body 810, a second conveying line body 820, a third conveying line body 830, and a fourth conveying line body 840. The first conveying line body 810, the second conveying line body 820, the third conveying line body 830, and the fourth conveying line body 840 are all communicated through the switching stator 1. The first conveying line body 810 is connected to the first diverging end 102. The second conveying line body 820 is connected to the second diverging end 103. The third conveying line body 830 is connected to the converging end 101. The fourth conveying line body 840 is connected to the third diverging end 104.

The first conveying track 200 includes a first slot 411 that is arranged distant from the second conveying track 300. The second conveying track 300 includes a second slot 421 that is arranged distant from the first conveying track 200. The third conveying track 700 includes a third slot 730 that is arranged distant from the second conveying track 300.

The mover module 2 has a first slider 610 and a second slider 620. The first slider 610 is slidably arranged in the first slot 411, and the first slot 411 is configured to guide the mover module 2 to move along the first conveying track 200. The second slider 620 is slidably arranged in the second slot 421 or the third slot 730. When the second slider 620 is arranged in the second slot 421, the second slot 421 is configured to guide the mover module 2 to move along the second conveying track 300; when the second slider 620 is arranged in the third slot 730, the third slot 730 is configured to guide the mover module 2 to move along the third conveying track 700.

Relevant information about the first conveying track 200, the second conveying track 300, the first conveying line body 810, the second conveying line body 820, and the third conveying line body 830 have been described above, and is not to be repeated here. This embodiment of the present disclosure focuses on describing the fourth conveying line body 840 and the third conveying track 700. The fourth conveying line body 840 connected to the third diverging end 104 may also include a third slot 730. That is, the third conveying track 700 and the fourth conveying line body 840 have the third slot 730 continuously arranged, so that the mover module 2, when running on the fourth conveying line body 840, can also be limited and guided by the third slot 730, which consequently improves the stability of the mover module 2 running on the fourth conveying line body 840. Further, when the mover module 2 switches between the fourth conveying line body 840 and the third conveying track 700, the second slider 620 always remains within the third slot 730 to further improve the stability of the mover module 2 during movement. Moreover, the third slot 730 guides the second slider 620, so as to ensure that the movement trajectory of the mover module 2 meets the requirements.

Additionally, the fourth conveying line body 840 may include a first sub-line body 850, a second sub-line body 860, and an arc-shaped stator to form a curved track.

Further, referring to FIGS. 3, 4, and 8, a first retractable member 430 that can be extended and retracted is provided within the first slot 411, and a second retractable member 440 and a third retractable member 470 that can be extended and retracted are provided within the second slot 421, and a fourth retractable member 731 that can be extended and retracted is provided within the third slot 730. The first retractable member 430, the second retractable member 440, the fourth retractable member 731, and the third retractable member 470 are all arranged adjacent to the converging end 101.

In the present disclosure, the third retractable member 470 is arranged at where the second slot 421 and the third slot 730 are communicated. When the third retractable member 470 is lifted, the third retractable member 470 separates the second slot 421 into two parts. The third retractable member 470 is configured to abut against the second slider 620 to guide the second slider 620 to be conveyed along the third slot 730. The present disclosure does not limit the setting structure of the third retractable member 470. The third retractable member 470 may be a plate-like structure or may also be an arc-shaped plate-like structure. When the third retractable member 470 is an arc-shaped plate-like structure, the circle center of the third retractable member 470 can coincide with the circle center of the third slot 730.

In the present disclosure, the fourth retractable member 731 is arranged at a position of the third slot 730 that is closer to the second slot 421. When the fourth retractable member 731 is lifted, the fourth retractable member 731 is configured to abut against a side wall of the second slider 620 to prevent the second slider 620 from further moving into the third slot 730. The present disclosure does not limit the setting structure of the fourth retractable member 731. The fourth retractable member 731 may be a plate-like structure, and when the fourth retractable member 731 is lifted, at least one surface of the fourth retractable member 731 is flush with a groove wall on one side of the second slot 421 that is closer to the third conveying track 700.

It can be understood that since the second slot 421 and the third slot 730 are communicated, the fourth retractable member 731 and the third retractable member 470 need to be arranged at the communication position to achieve the selection of the conveying direction of the mover module 2. The fourth retractable member 731 is configured to guide the mover module 2 to be conveyed along the second slot 421. The third retractable member 470 is configured to guide the mover module 2 to be conveyed along the third slot 730.

The first retractable member 430 and the second retractable member 440 have been described in detail above, and is not to be repeated here. This embodiment of the present disclosure focuses on describing the switching process of the mover module 2 at the switching stator 1.

When the mover module 2 moves from the converging end 101 to the first diverging end 102, the first retractable member 430 is retracted, and the second retractable member 440, the fourth retractable member 731, and the third retractable member 470 are lifted. The first slider 610, under the limiting effect of the first slot 411, guides the mover module 2 to move along the first conveying track 200; the second retractable member 440 is lifted to fit with the second slider 620 such that the fitting between the second slider 620 and the second slot 421 is released, which further achieves the movement of the mover module 2 along the first conveying track 200.

When the mover module 2 moves from the converging end 101 to the second diverging end 103, the first retractable member 430 and the fourth retractable member 731 are lifted, and the second retractable member 440 and the third retractable member 470 are retracted. The first retractable member 430 is lifted to fit with the first slider 610 such that the fitting between the first slider 610 and the first slot 411 is released; the second retractable member 440 is retracted such that the second slider 620 is arranged within the second slot 421; the third retractable member 470 is retracted to ensure the stability of the second slider 620 being conveyed within the second slot 421, avoiding hindering the conveyance of the second slider 620 within the second slot 421; and the fourth retractable member 731 is lifted to block the second slider 620, preventing the second slider 620 from continuing being conveyed along the third slot 730, and limiting and guiding the second slider 620 to continue being conveyed in the extension direction of the second slot 421. Through the retractable fittings of the different retractable members described above, the stable running of the mover module 2 along the second conveying track 300 is achieved.

When the mover module 2 moves from the converging end 101 to the third diverging end 104, the first retractable member 430 and the third retractable member 470 are lifted, and the second retractable member 440 and the fourth retractable member 731 are retracted. The first retractable member 430 is lifted to fit with the first slider 610 such that the fitting between the first slider 610 and the first slot 411 is released; the second retractable member 440 is retracted such that the second slider 620 is arranged within the second slot 421; the third retractable member 470 is lifted to block the second slider 620, preventing the second slider 620 from continuing being conveyed along the second slot 421, limiting and guiding the second slider 620 to continue being conveyed in the extension direction of the third slot 730; the fourth retractable member 731 is retracted to ensure the stability of the second slider 620 being conveyed within the third slot 730, avoiding hindering the conveyance of the second slider 620 within the third slot 730. Through the retractable fittings of the different retractable members described above, the stable running of the mover module 2 along the third conveying track 700 is achieved.

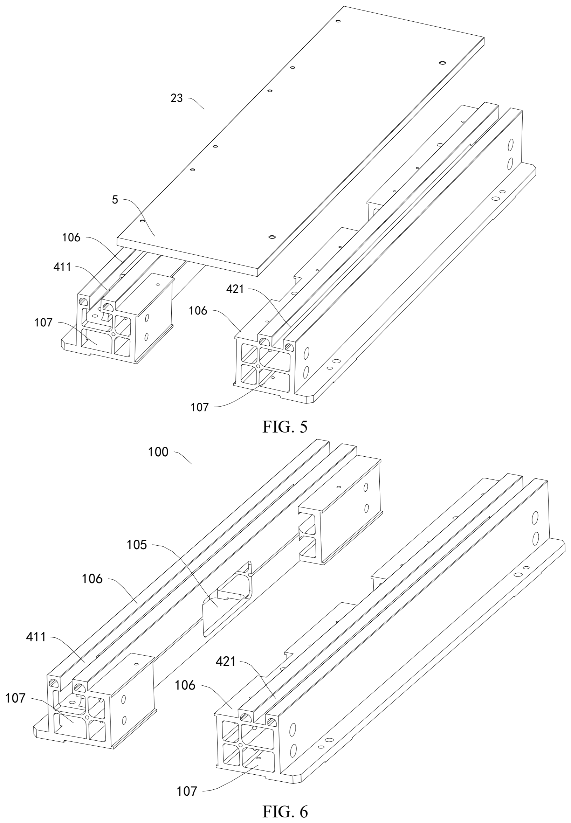

In some embodiments of the present disclosure, as shown in FIGS. 5 and 6, the second track stator 23 includes a base 100, a coil assembly 5 and a drive circuit board (not shown in the figure). The coil assembly 5 is arranged above the base 100. The coil assembly 5, when magnetically coupled to the permanent magnet array 6, is configured to drive the mover module 2 to move along the second track stator 23. The drive circuit board is electrically connected to the coil assembly 5. A wire connected to the drive circuit board is provided within the insertion slot 105 in a penetrating manner. The drive circuit board and the coil assembly 5 can be integrated as a whole. For example, the coil assembly 5 is integrated to the drive circuit board by printing.

A lower surface of the base 100 can be mounted on the base plate 22a, and an upper surface of the base 100 is provided with a mounting groove, and the coil assembly 5 is located within the mounting groove to reduce the height of the second track stator 23.

The insertion slot 105 is provided, so that the wire connected to the drive circuit board passes through the insertion slot 105 to be connected to a power supply, making the wiring of the drive circuit board more convenient and reducing the probability of damage to the wires of the drive circuit board due to bending. The power supply can supply power to the coil assembly 5 through the wire of the drive circuit board. The drive circuit board can control the direction and magnitude of a current supplied to the coil assembly 5, thereby controlling the direction of movement of the mover module 2 along the second track stator 23.

Further, as shown in FIGS. 5 and 6, the base 100 includes two sub-bases 106. The two sub-bases 106 are spaced along the width direction of the second track stator 23. At least one of the sub-bases 106 is provided with an insertion slot 105. The insertion slot 105 extends through the sub-base 106 where the insertion slot 105 is located along the width direction of the second track stator 23.

Compared with the base 100 being constructed as an integrated structure, the base 100 according to the present disclosure is configured as a split structure. No connection structure is needed between the two sub-bases 106. This facilitates reducing the weight of the base 100, reduces material usage, reduces costs, and achieves higher efficiency of disassembly and assembly, thereby increasing the speed of line construction and the splicing accuracy.

Specifically, as shown in FIGS. 5 and 6, the sub-base 106 is provided with a weight-reducing groove 107 which extends along the extension direction of the sub-base 106. The weight-reducing groove 107 can penetrate through an end face of at least one end of the sub-base 106. That is, the weight-reducing groove 107 can penetrate through an end face of one end of the sub-base 106, and one end of the weight-reducing groove 107 is open, and an end face of the other end of the sub-base 106 is closed. Or, the weight-reducing groove 107 can penetrate through end faces of both ends of the sub-base 106, and two ends of the weight-reducing groove 107 are open, and the sub-base 106 can be processed by extrusion molding.

This can reduce the weight of the sub-base 106, reduce costs, and facilitate the lightweight setting of the second track stator 23.

In some embodiments of the present disclosure, as shown in FIGS. 1, 2a, and 2b, the magnetic drive conveying system 3 further includes a stand 20. Both the first conveying module 21 and the second conveying module 22 are mounted on the stand 20. The first conveying module 21 and the second conveying module 22 are spaced in the vertical direction, or the first conveying module 21 and the second conveying module 22 are spaced in the horizontal direction.

The stand 20 is provided, so that the relative positions between the first conveying module 21 and the second conveying module 22 can be fixed, and the layout methods of the first conveying module 21 and the second conveying module 22 are more diverse, which facilitates making the magnetic drive conveying system 3 applicable to different use conditions.

In some embodiments of the present disclosure, the mover module 2 is provided with a passive signal transmitter (not shown in the figure), and at least one of the switching stator 1 and the plurality of second track stators 23 is provided with an active signal receiver (not shown in the figure). The active signal receiver is configured to receive a signal transmitted by the passive signal transmitter.

For example, the passive signal transmitter may be an optical grating, a magnetic grating, etc., and the active signal receiver may be a read head which is configured to read a signal of the optical grating or magnetic grating to obtain the current position and movement trajectory of the mover module 2 on the conveying line body, thereby judging whether the movement trajectory of the mover module 2 conforms to a preset trajectory, so as to timely know whether the magnetic drive conveying system 3 is in a normal use state.

In some embodiments of the present disclosure, the permanent magnet array 6 of the mover module 2 may contain a magnetic grating. That is, the magnetic grating can not only be configured to position the mover module 2, but also be configured to be magnetically coupled to the armature winding to drive the mover module 2 to move, which improves functional integration and reduces the quantity of parts.

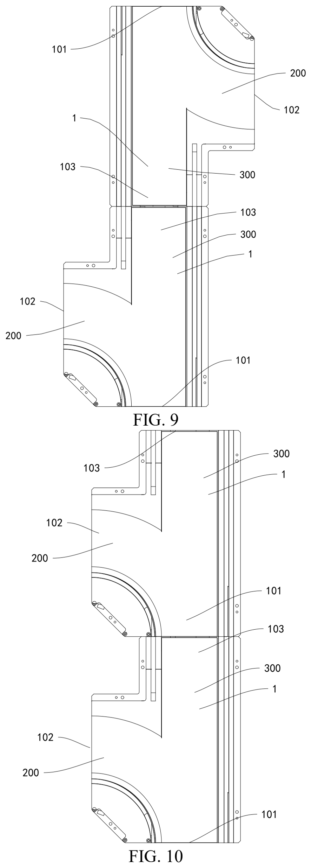

In some embodiments of the present disclosure, as shown in FIGS. 9-24, a plurality of switching stators 1 are provided, and at least two of the switching stators 1 are adjacent. The connection method for two adjacent switching stators 1 is one of the following:
configuration 1: the converging end 101 of one of the switching stators 1 is spliced with any one of the converging end 101, the first diverging end 102, or the second diverging end 103 of the other one of the switching stators 1;
configuration 2: the first diverging end 102 of one of the switching stators 1 is spliced with any one of the converging end 101, the first diverging end 102, or the second diverging end 103 of the other one of the switching stators 1;
configuration 3: the second diverging end 103 of one of the switching stators 1 is spliced with any one of the converging end 101, the first diverging end 102, or the second diverging end 103 of the other one of the switching stators 1.

As such, according to the embodiment of the present disclosure, at least two adjacent switching stators are provided to improve the conveying diversity and conveying efficiency of the magnetic drive conveying system.

Further, when the second track stator 23 is the switching stator 1, at this time, there is a case where two switching stators 1 are spliced with each other. The connection method when the switching stators 1 without the third diverging end are adjacent is exemplified below in conjunction with the accompanying drawings.

As shown in FIG. 9, when two switching stators 1 are adjacent, the second diverging end of one of the switching stators 1 (such as the switching stator located at the bottom in FIG. 9) is spliced with the second diverging end of the other one of the switching stators 1 (such as the switching stator located at the top in FIG. 9).

As shown in FIG. 10, when two switching stators 1 are adjacent, the second diverging end of one of the switching stators 1 (such as the switching stator located at the bottom in FIG. 10) is spliced with the converging end of the other one of the switching stators 1 (such as the switching stator located at the top in FIG. 10).

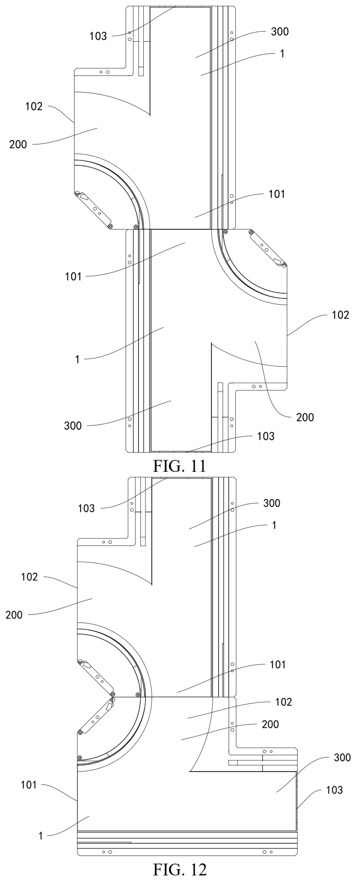

As shown in FIG. 11, when two switching stators 1 are adjacent, the converging end of one of the switching stators 1 (such as the switching stator located at the bottom in FIG. 11) is spliced with the converging end of the other one of the switching stators 1 (such as the switching stator located at the top in FIG. 11).

As shown in FIG. 12, when two switching stators 1 are adjacent, the first diverging end of one of the switching stators 1 (such as the switching stator located at the bottom in FIG. 12) is spliced with the converging end of the other one of the switching stators 1 (such as the switching stator located at the top in FIG. 12).

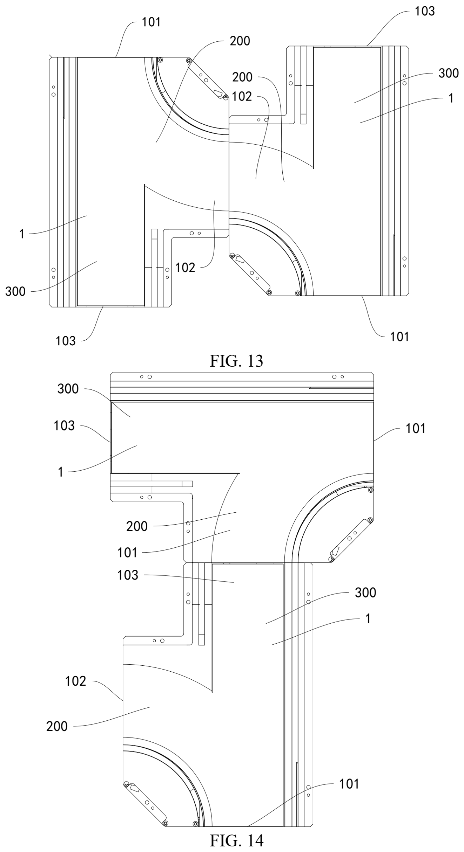

As shown in FIG. 13, when two switching stators 1 are adjacent, the first diverging end of one of the switching stators 1 (such as the switching stator located on the left in FIG. 13) is spliced with the first diverging end of the other one of the switching stators 1 (such as the switching stator located on the right in FIG. 13).

As shown in FIG. 14, when two switching stators 1 are adjacent, the second diverging end of one of the switching stators 1 (such as the switching stator located at the bottom in FIG. 14) is spliced with the first diverging end of the other one of the switching stators 1 (such as the switching stator located at the top in FIG. 14).

The conveying methods shown in FIGS. 9-14 are described in conjunction with the drawings.

The switching stator 1 has a converging end 101, a first diverging end 102, and a second diverging end 103. When the conveyance is from the converging end 101 to the first diverging end 102, the first retractable member 430 is retracted, and the second retractable member 440 is lifted; when the conveyance is from the converging end 101 to the second diverging end 103, the first retractable member 430 is lifted, and the second retractable member 440 is retracted; when the conveyance is from the first diverging end 102 to the converging end 101, the first retractable member 430 is retracted, and the second retractable member 440 can either be in a lifted state or in a retracted state; when the conveyance is from the second diverging end 103 to the converging end 101, both the first retractable member 430 and the second retractable member 440 are in retracted states.

Therefore, for the illustrative drawings shown in FIGS. 9 to 14, the concept of sequential order is introduced according to the conveying direction. Taking FIG. 9 as an example, assuming that the mover module 2 is conveyed from the converging end 101 of the switching stator 1 at the bottom to the converging end 101 of the switching stator 1 at the top through the second conveying track 300. That is, along the conveying direction of the mover module 2, the mover module 2 sequentially passes through the switching stator 1 at the bottom and the switching stator 1 at the top. Therefore, along the conveying direction of the mover module 2, for the switching stator 1 at the bottom, the mover module 2 is conveyed from the converging end 101 to the second diverging end 103, so the first retractable member 430 is lifted and the second retractable member 440 is retracted; but then for the switching stator 1 at the top, the mover module 2 is conveyed from the second diverging end 103 to the converging end 101, so both the first retractable member 430 and the second retractable member 440 are in retracted states.

Further, for the same switching stator 1, conveyance from the first diverging end 102 to the second diverging end 103 can be divided into conveying from the first diverging end 102 to the converging end 101 and subsequently conveying from the converging end 101 to the second diverging end 103. Conveying from the second diverging end 103 to the first diverging end 102 adopts the same principle.

FIGS. 9 to 14 merely schematically describe the splicing method for two switching stators 1 without the third diverging ends 104. The above splicing methods are not exhaustive, but other splicing methods for two switching stators 1 without the third diverging ends 104 are still within the protection scope of the present disclosure. Moreover, the embodiment of the present disclosure does not limit the conveying direction, nor does it limit the sequential order of the conveying tracks. Regardless of the conveying direction and conveying tracks adopted, the stable conveying of the mover module 2 can be achieved by sequentially controlling the retractable members in the switching stator 1 to be lifted in turn based on the conveying direction.

The connection method when the switching stators 1 with the third diverging ends are adjacent is exemplified below in conjunction with the accompanying drawings.

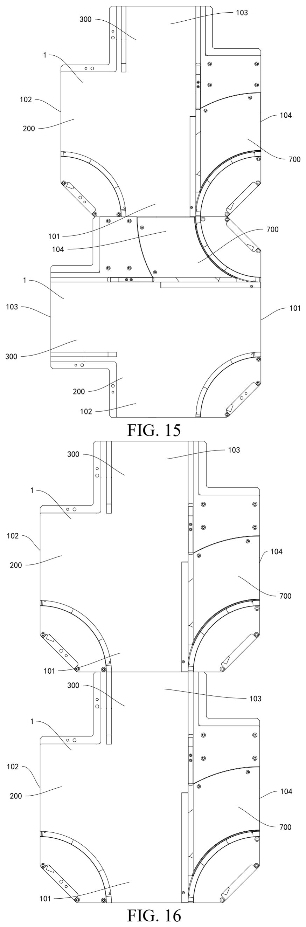

As shown in FIG. 15, when two switching stators 1 are adjacent, the third diverging end of one of the switching stators 1 (such as the switching stator located at the bottom in FIG. 15) is spliced with the converging end of the other one of the switching stators 1 (such as the switching stator located at the top in FIG. 15).

As shown in FIG. 16, when two switching stators 1 are adjacent, the second diverging end of one of the switching stators 1 (such as the switching stator located at the bottom in FIG. 16) is spliced with the converging end of the other one of the switching stators 1 (such as the switching stator located at the top in FIG. 16).

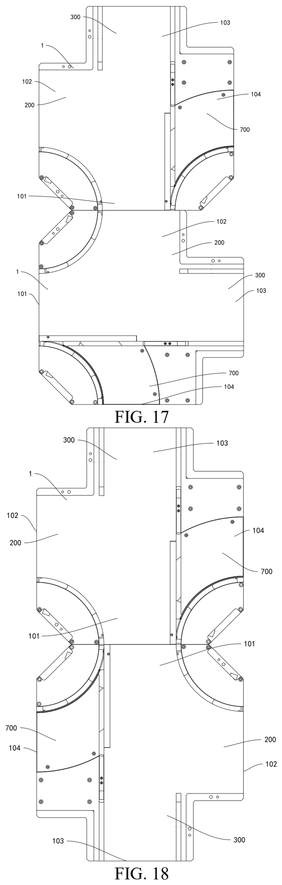

As shown in FIG. 17, when two switching stators 1 are adjacent, the first diverging end of one of the switching stators 1 (such as the switching stator located at the bottom in FIG. 17) is spliced with the converging end of the other one of the switching stators 1 (such as the switching stator located at the top in FIG. 17).

As shown in FIG. 18, when two switching stators 1 are adjacent, the converging end of one of the switching stators 1 (such as the switching stator located at the bottom in FIG. 18) is spliced with the converging end of the other one of the switching stators 1 (such as the switching stator located at the top in FIG. 18).

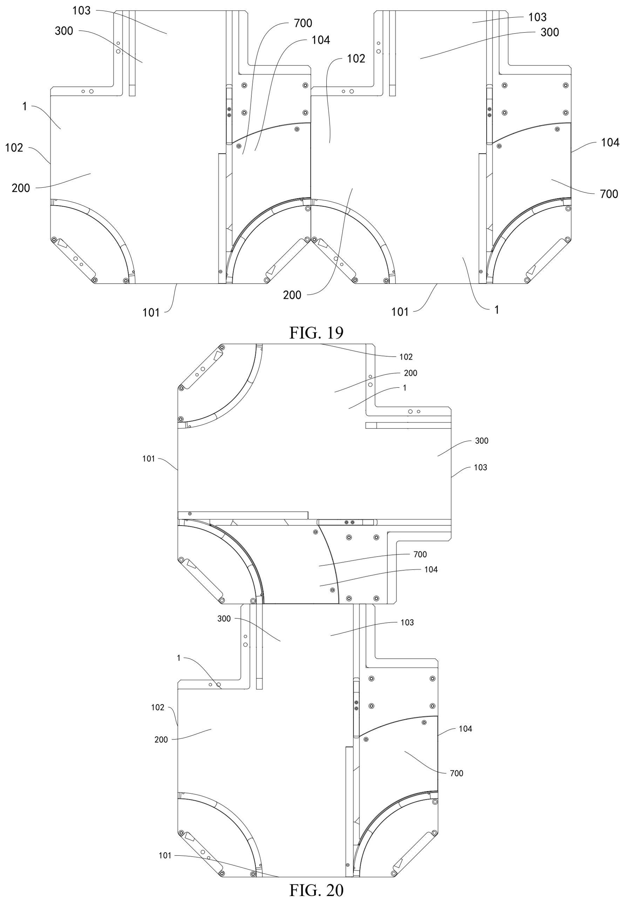

As shown in FIG. 19, when two switching stators 1 are adjacent, the third diverging end of one of the switching stators 1 (such as the switching stator located on the left in FIG. 19) is spliced with the first diverging end of the other one of the switching stators 1 (such as the switching stator located on the right in FIG. 19).

As shown in FIG. 20, when two switching stators 1 are adjacent, the third diverging end of one of the switching stators 1 (such as the switching stator located at the bottom in FIG. 20) is spliced with the second diverging end of the other one of the switching stators 1 (such as the switching stator located at the top in FIG. 20).

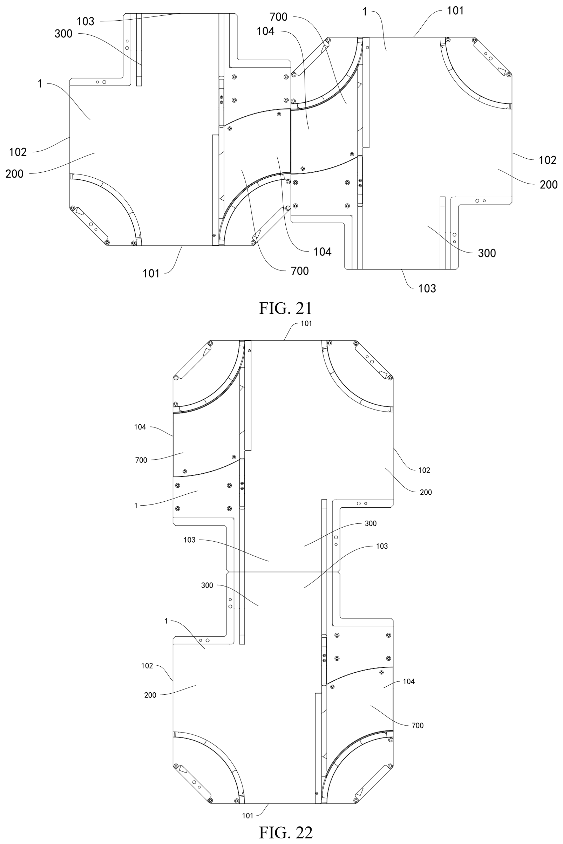

As shown in FIG. 21, when two switching stators 1 are adjacent, the third diverging end of one of the switching stators 1 (such as the switching stator located on the left in FIG. 21) is spliced with the third diverging end of the other one of the switching stators 1 (such as the switching stator located on the right in FIG. 21).

As shown in FIG. 22, when two switching stators 1 are adjacent, the second diverging end of one of the switching stators 1 (such as the switching stator located at the bottom in FIG. 22) is spliced with the second diverging end of the other one of the switching stators 1 (such as the switching stator located at the top in FIG. 22).

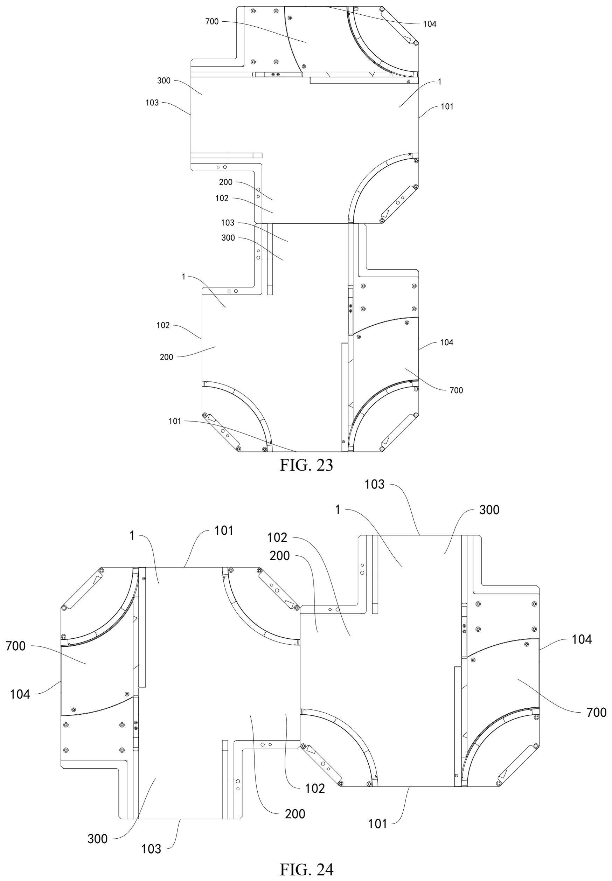

As shown in FIG. 23, when two switching stators 1 are adjacent, the second diverging end of one of the switching stators 1 (such as the switching stator located at the bottom in FIG. 23) is spliced with the first diverging end of the other one of the switching stators 1 (such as the switching stator located at the top in FIG. 23).

As shown in FIG. 24, when two switching stators 1 are adjacent, the first diverging end of one of the switching stators 1 (such as the switching stator located on the left in FIG. 24) is spliced with the first diverging end of the other one of the switching stators 1 (such as the switching stator located on the right in FIG. 24).

The conveying methods shown in FIGS. 15-24 are described in conjunction with FIGS. 1 to 8.

The switching stator 1 has a converging end 101, a first diverging end 102, a second diverging end 103, and a third diverging end 104. When the conveyance is from the converging end 101 to the first diverging end 102, the first retractable member 430 is retracted, and the second retractable member 440, the fourth retractable member 731, and the third retractable member 470 are lifted; when the conveyance is from the converging end 101 to the second diverging end 103, the first retractable member 430 and the fourth retractable member 731 are lifted, and the second retractable member 440 and the third retractable member 470 are retracted; when the conveyance is from the converging end 101 to the third diverging end 104, the first retractable member 430 and the third retractable member 470 are lifted, and the second retractable member 440 and the fourth retractable member 731 are retracted; when the conveyance is from the first diverging end 102 to the converging end 101, the first retractable member 430 and the third retractable member 470 are in retracted states, and the fourth retractable member 731 is in a lifted state, and the second retractable member 440 can either be in a lifted state or in a retracted state; when the conveyance is from the second diverging end 103 to the converging end 101, the first retractable member 430, the second retractable member 440, and the third retractable member 470 are all in retracted states, and the fourth retractable member 731 is in a lifted state; when the conveyance is from the third diverging end 104 to the converging end 101, the first retractable member 430 can either be in a lifted state or in a retracted state, and both the second retractable member 440 and the fourth retractable member 731 are in retracted states, and the third retractable member 470 is in a lifted state.

Therefore, for the illustrative drawings shown in FIGS. 15 to 24, the concept of sequential order is introduced according to the conveying direction. Taking FIG. 22 as an example, assuming that the mover module 2 is conveyed from the converging end 101 of the switching stator 1 at the bottom to the converging end 101 of the switching stator 1 at the top through the second conveying track 300. That is, along the conveying direction of the mover module 2, the mover module 2 sequentially passes through the switching stator 1 at the bottom and the switching stator 1 at the top. Therefore, along the conveying direction of the mover module 2, for the switching stator 1 at the bottom, the mover module 2 is conveyed from the converging end 101 to the second diverging end 103, so the first retractable member 430 and the fourth retractable member 731 are lifted, and the second retractable member 440 and the third retractable member 470 are retracted; but then for the switching stator 1 at the top, the mover module 2 is conveyed from the second diverging end 103 to the converging end 101, so the first retractable member 430, the second retractable member 440, and the third retractable member 470 are all in retracted states, and the fourth retractable member 731 is in a lifted state.

Further, for the same switching stator 1, conveying from the first diverging end 102 to the second diverging end 103 can be divided into conveying from the first diverging end 102 to the converging end 101 and subsequently conveying from the converging end 101 to the second diverging end 103. Conveying from the second diverging end 103 to the first diverging end 102, conveying from the second diverging end 103 to the third diverging end 104, conveying from the first diverging end 102 to the third diverging end 104, conveying from the third diverging end 104 to the first diverging end 102, and conveying from the third diverging end 104 to the second diverging end 103 adopt the same principle.

FIGS. 15 to 24 merely schematically describe the splicing method for two switching stators 1 with the third diverging ends 104. The above splicing methods are not exhaustive, but other splicing methods for two switching stators 1 with the third diverging ends 104 are still within the protection scope of the present disclosure. Moreover, the embodiment of the present disclosure does not limit the conveying direction, nor does it limit the sequential order of the conveying tracks. Regardless of the conveying direction and conveying tracks adopted, the stable conveying of the mover module 2 can be achieved by sequentially controlling the retractable members in the switching stator 1 to be lifted in turn based on the conveying direction.

In the drawings of the embodiments of the present disclosure, the same or similar reference numerals correspond to the same or similar components. In the description of the present disclosure, it is to be understood that directional or positional relationships indicated by terms "upper", "lower", "left", "right" or the like are directional or positional relationships shown based on the drawings, and are merely for the convenience of describing the present disclosure and simplifying the description, rather than indicating or implying that the referred device or element must have a specific orientation or be constructed and operated in a specific orientation. Therefore, the terms used in the drawings to describe positional relationships are merely for illustrative purposes and are not to be construed as limiting the present disclosure. For those skilled in the art, the specific meanings of the above terms can be understood according to specific circumstances.

The above are merely preferred embodiments of the present disclosure, and are not intended to limit the present disclosure. Any modifications, equivalent replacements, improvements, or the like made within the spirit and principles of the present disclosure are to be included within the protection scope of the present disclosure.

## Claims

1. A magnetic drive conveying system (3), comprising:
a first conveying module (21), comprising a plurality of first track stators (4);
a second conveying module (22), comprising a switching stator (1) and at least one second track stator (23), wherein the switching stator (1) has at least a converging end (101), a first diverging end (102), and a second diverging end (103), the switching stator (1) and the at least one second track stator (23) cooperate to form at least one conveying line body, the switching stator (1) comprises a first conveying track (200) and a second conveying track (300), the first conveying track (200) is located between the converging end (101) and the first diverging end (102) and comprises a first armature winding (210), the second conveying track (300) is located between the converging end (101) and the second diverging end (103) and comprises a second armature winding (310);
a mover module (2), provided with a permanent magnet array (6), wherein the mover module (2) moves along the first conveying track (200) when the permanent magnet array (6) is magnetically coupled to the first armature winding (210), the mover module (2) moves along the second conveying track (300) when the permanent magnet array (6) is magnetically coupled to the second armature winding (310);
a docking module (26), comprising a transfer component and a third track stator (24), wherein the transfer component is configured to drive the third track stator (24) to move between the first conveying module (21) and the second conveying module (22), so as to connect with the first track stator (4), the second track stator (23), or the switching stator (1);
the first conveying track (200) is provided with a first slot (411), and the second conveying track (300) is provided with a second slot (421);
the mover module (2) has a first slider (610) and a second slider (620), wherein the first slider (610) and the second slider (620) are capable of being extended and retracted relative to the mover module (2), the first slider (610) is slidably arranged in the first slot (411) and the first slider (610) is configured to guide the mover module (2) to move along the first conveying track (200);
the second slider (620) is slidably arranged in the second slot (421) and the second slider (620) is configured to guide the mover module (2) to move along the second conveying track (300).

2. The magnetic drive conveying system (3) according to claim 1, wherein an upper side of the mover module (2) is connected to a tray (27), an orthogonal projection of the tray (27) onto the mover module (2) covering the mover module (2);
two opposite sides in a width direction of the conveying line body are provided with baffles (28), and in a height direction of the conveying line body, the baffles (28) are at least higher than a lower surface of the tray (27) to define the moving stroke of the tray (27) in the width direction of the conveying line body.

3. The magnetic drive conveying system (3) according to claim 1, wherein the second track stator (23) which cooperates with the switching stator (1) to form the conveying line body is at least one of the switching stator (1), a linear stator, and an arc-shaped stator.

4. The magnetic drive conveying system (3) according to claim 2, wherein the baffle (28) is provided with rollers (29), the rollers (29) being in contact with the lower surface of the tray (27); and/or
the tray (27) is provided with rollers (29), and one side face of each baffle (28) facing the mover module (2) is provided with a protrusion, the rollers (29) being in contact with the protrusion.

5. The magnetic drive conveying system (3) according to claim 2, wherein an access opening is defined between the baffles (28) on the two opposite sides in the width direction of the conveying line body, the access opening is located on one side of the mover module (2) away from the conveying line body, and the mover module (2) is placed into or taken out from between the baffles (28) through the access opening.

6. The magnetic drive conveying system (3) according to claim 4, wherein the switching stator (1) and three second track stators (23) cooperate to form three conveying line bodies which are respectively:
a first conveying line body (810), a second conveying line body (820), and a third conveying line body (830), wherein the first conveying line body (810), the second conveying line body (820), and the third conveying line body (830) are communicated through the switching stator (1), the first conveying line body (810) is connected to the first diverging end (102), the second conveying line body (820) is connected to the second diverging end (103), the third conveying line body (830) is connected to the converging end (101), a center axis of the first conveying line body (810) and a center axis of the second conveying line body (820) are non-parallel.

7. The magnetic drive conveying system (3) according to claim 6, wherein the baffle (28) has an avoidance notch (28a), the avoidance notch (28a) is adjacent to an intersection of the first conveying line body (810), the second conveying line body (820), and the third conveying line body (830), and the avoidance notch (28a) avoids the tray (27) when the mover module (2) moves among the first conveying line body (810), the second conveying line body (820), and the third conveying line body (830).

8. The magnetic drive conveying system (3) according to claim 6, wherein the at least one second track stator (23) is an arc-shaped stator, and at least one of the three conveying line bodies comprises a first sub-line body (850), a second sub-line body (860), and the arc-shaped stator, the first sub-line body (850) and the second sub-line body (860) being connected to both ends of the arc-shaped stator.

9. The magnetic drive conveying system (3) according to claim 7, wherein a turning radius of the first slider (610) is less than a turning radius of the second slider (620) when the mover module (2) switches on the switching stator (1);
a maximum distance between either end of the mover module (2) in a movement direction of the mover module (2) and the first slider (610) is L1, a size of the avoidance notch (28a) along an extension direction of a conveying line body where the avoidance notch (28a) is located is L2, and L1 ≤ L2.

10. The magnetic drive conveying system (3) according to claim 1, wherein a first retractable member (430) capable of being extended and retracted is provided within the first slot (411), and a second retractable member (440) capable of being extended and retracted is provided within the second slot (421), the first retractable member (430) and the second retractable member (440) are arranged adjacent to the converging end (101);
the first slider (610) and the second slider (620) are capable of being extended and retracted relative to the mover module (2);
when the mover module (2) moves from the converging end (101) to the first diverging end (102), the first retractable member (430) is retracted, and the second retractable member (440) is lifted, and the first slider (610) remains within the first slot (411), and the second slider (620), pushed by the second retractable member (440), is disengaged from the second slot (421);
when the mover module (2) moves from the converging end (101) to the second diverging end (103), the first retractable member (430) is lifted, and the second retractable member (440) is retracted, and the first slider (610), pushed by the first retractable member (430), is disengaged from the first slot (411), and the second slider (620) remains within the second slot (421).

11. The magnetic drive conveying system (3) according to claim 3, wherein the switching stator (1) further has a third diverging end (104), and the first diverging end (102) and the third diverging end (104) are arranged on both sides of the second diverging end (103);
the switching stator (1) further comprises a third conveying track (700), wherein the third conveying track (700) is located between the converging end (101) and the third diverging end (104) and comprises a third armature winding (710), the third armature winding (710), when magnetically coupled to the permanent magnet array (6), is configured to drive the mover module (2) to move between the converging end (101) and the third diverging end (104).

12. The magnetic drive conveying system (3) according to claim 11, wherein the switching stator (1) and four second track stators (23) cooperate to form four conveying line bodies which are respectively:
a first conveying line body (810), a second conveying line body (820), a third conveying line body (830), and a fourth conveying line body (840), wherein the first conveying line body (810), the second conveying line body (820), the third conveying line body (830), and the fourth conveying line body (840) are all communicated through the switching stator (1), the first conveying line body (810) is connected to the first diverging end (102), the second conveying line body (820) is connected to the second diverging end (103), the third conveying line body (830) is connected to the converging end (101), the fourth conveying line body (840) is connected to the third diverging end (104);
the first conveying track (200) comprises a first slot (411) that is arranged distant from the second conveying track (300), and the second conveying track (300) comprises a second slot (421) that is arranged distant from the first conveying track (200), and the third conveying track (700) comprises a third slot (730) that is arranged distant from the second conveying track (300);
the mover module (2) has a first slider (610) and a second slider (620), wherein the first slider (610) is slidably arranged in the first slot (411) and the first slot (411) is configured to guide the mover module (2) to move along the first conveying track (200), the second slider (620) is slidably arranged in the second slot (421) or the third slot (730); when the second slider (620) is arranged in the second slot (421), the second slot (421) is configured to guide the mover module (2) to move along the second conveying track (300); and when the second slider (620) is arranged in the third slot (730), the third slot (730) is configured to guide the mover module (2) to move along the third conveying track (700).

13. The magnetic drive conveying system (3) according to claim 12, wherein a first retractable member (430) capable of being extended and retracted is provided within the first slot (411), and a second retractable member (440) and a third retractable member (470) that are capable of being extended and retracted are provided within the second slot (421), and a fourth retractable member (731) capable of being extended and retracted is provided within the third slot (730), the first retractable member (430), the second retractable member (440), the fourth retractable member (731), and the third retractable member (470) are all arranged adjacent to the converging end (101);
when the mover module (2) moves from the converging end (101) to the first diverging end (102), the first retractable member (430) is retracted, and the second retractable member (440), the fourth retractable member (731), and the third retractable member (470) are lifted, and the first slider (610) remains within the first slot (411), and the second slider (620), pushed by the second retractable member (440), is disengaged from the second slot (421);
when the mover module (2) moves from the converging end (101) to the second diverging end (103), the first retractable member (430) and the fourth retractable member (731) are lifted, and the second retractable member (440) and the third retractable member (470) are retracted, and the first slider (610), pushed by the first retractable member (430), is disengaged from the first slot (411), and the second slider (620) remains within the second slot (421);
when the mover module (2) moves from the converging end (101) to the third diverging end (104), the first retractable member (430) and the third retractable member (470) are lifted, and the second retractable member (440) and the fourth retractable member (731) are retracted, and the first slider (610), pushed by the first retractable member (430), is disengaged from the first slot (411), and the second slider (620) remains within the third slot (730).

14. The magnetic drive conveying system (3) according to claim 1, wherein the second track stator (23) comprises:
a base (100), provided with an insertion slot (105);
a coil assembly (5), provided above the base (100), wherein the coil assembly (5), when magnetically coupled to the permanent magnet array (6), is configured to drive the mover module (2) to move along the second track stator (23);
a drive circuit board, electrically connected to the coil assembly (5), wherein a wire connected to the drive circuit board is provided within the insertion slot (105) in a penetrating manner.

15. The magnetic drive conveying system (3) according to claim 14, wherein the base (100) comprises:
two sub-bases (106), spaced along a width direction of the second track stator (23), wherein at least one of the sub-bases (106) is provided with the insertion slot (105), the insertion slot (105) extends through the sub-base (106) where the insertion slot (105) is located along the width direction of the second track stator (23).

16. The magnetic drive conveying system (3) according to claim 15, wherein the sub-base (106) is provided with a weight-reducing groove (107) which extends along an extension direction of the sub-base (106).

17. The magnetic drive conveying system (3) according to any one of claims 1 to 16, further comprising:
a stand (20), wherein both the first conveying module (21) and the second conveying module (22) are mounted on the stand (20), the first conveying module (21) and the second conveying module (22) are spaced in a vertical direction, or the first conveying module (21) and the second conveying module (22) are spaced in a horizontal direction.

18. The magnetic drive conveying system (3) according to any one of claims 1 to 16, wherein the transfer component comprises at least one of a linear motor, a rotary motor, a pneumatic actuator, and a hydraulic actuator.

19. The magnetic drive conveying system (3) according to any one of claims 1 to 16, wherein the mover module (2) is provided with a passive signal transmitter, and at least one of the switching stator (1) and the plurality of second track stators (23) is provided with an active signal receiver, the active signal receiver is configured to receive a signal transmitted by the passive signal transmitter.

20. The magnetic drive conveying system (3) according to any one of claims 1 to 16, wherein a plurality of switching stators (1) are provided, at least two of the switching stators (1) are adjacent, and the connection between two adjacent switching stators (1) is in one of the following configurations:
configuration 1: the converging end (101) of one of the switching stators (1) is spliced with any one of the converging end (101), the first diverging end (102), or the second diverging end (103) of the other one of the switching stators (1);
configuration 2: the first diverging end (102) of one of the switching stators (1) is spliced with any one of the converging end (101), the first diverging end (102), or the second diverging end (103) of the other one of the switching stators (1); and
configuration 3: the second diverging end (103) of one of the switching stators (1) is spliced with any one of the converging end (101), the first diverging end (102), or the second diverging end (103) of the other one of the switching stators (1).
